# EUROPEAN PATENT APPLICATION

(11) **EP 3 761 205 A1**
(43) Date of publication of application: **06.01.2021**
(21) Application number: 19184458.8
(22) Date of filing: 04.07.2019
(51) Int. Cl.: G06F 21/62, G06F 21/71, H04L 29/06, G06F 15/78, H04L 29/08, H04W 4/70, H04L 9/32, G06F 21/64, H04W 12/06

(54) **SYSTEM-ON-CHIP ARRANGEMENT**

(71) Applicant: Secure Thingz Limited, Trumpington, Cambridge CB2 9FF (GB)
(72) Inventor: SPITZ, Stephan, 85757 Karlsfeld (DE); POVEY, Haydn, Cambridge, CB2 9FF (GB)
(74) Representative: Patentship Patentanwaltsgesellschaft mbH

(57) **Abstract**

The disclosure relates to a System-on-Chip arrangement (100) which comprises: a common processor carrier (101); a processor bus (103); an electronic component (105) arranged on the common processor carrier (101), the electronic component (105) being attached to the processor bus (103); a processor (107) arranged on the common processor carrier (101), the processor (107) being attached to the processor bus for accessing to the electronic component over the processor bus; a configurable bus master circuit (109), the configurable bus master circuit (109) being configured to control an access of the processor (107) to the electronic component (105) over the processor bus (103) according to an access rule; a memory (111) being configured to store configuration data (123) for configuring the bus master circuit (109) in order to control access of the processor (107) to the electronic component (105) according to the access rule, wherein the configuration data (123) is digitally signed with a digital signature upon the basis of a cryptographic encryption key, wherein the cryptographic encryption key is associated with a cryptographic decryption key, wherein the cryptographic encryption key and the cryptographic decryption key jointly form an asymmetric cryptographic key pair; and wherein the configurable bus master circuit (109) is configurable according to the access rule after successful verification of the digital signature upon the basis of the cryptographic decryption key.

## Description

### TECHNICAL FIELD

In general, the present invention relates to the field of system-on-chip data security.

### BACKGROUND

Electronic communication devices, such as mobile phones or loT (loT: Internet of things) devices in general, usually include one or more processors configured to execute program code, such as application code, firmware code or, generally, an operation code, for performing different operations, such as processing data and/or communicating with other electronic communication devices in a communication network.

In order to provide an efficient loT device, the processors can be arranged on a common carrier to form a multiprocessor system implementing a system on chip which can be adapted to perform at least partly different tasks. In order to support communications between various components of a system on chip, a processor bus is provided. The multiprocessor systems can be further implemented as embedded systems which can be specifically designed for a specific loT applications, such as capturing and transmitting data.

Although a system on chip is usually implemented as a module, the processors and other components are operated by software programs, which may be exposed to a software attack as well.

In light of the above, there is a need for improving a security of a system-on-chip arrangement.

### SUMMARY

It is an object of the invention to provide a more secure system-on-chip arrangement.

The foregoing and other objects are achieved by the subject matter of the independent claims. Further implementation forms are apparent from the dependent claims, the description and the figures.

Generally, the present invention relates to an improved System-on-Chip arrangement in which digital data can be stored in an electronic component of the can be accessed. The embodiments of the present invention can accomplish a high-level security and become independent of any security software via a security policy enforcement on a system bus, e.g. an AMBA (Advanced Microcontroller Bus Architecture) bus on the improved System-on-Chip arrangement.

In this way, the embodiments of the invention enable a straightforward, scalable and sustainable implementation for data security in the Internet of Thing (loT) systems as well as offer in particular advantages, such as protecting intellectual assets, accelerating trustworthy data delivery and simplifying the implementation of security measures.

The embodiments of the invention can be implemented in the following use cases with high security: secure feature enablement on the System-on-Chip arrangement, overproduction count and grey-market prevention, secure System-on-Chip disabling (end-of-life); surveillance of data processed in the system according a certain rule (e.g. CAN); bus filtering; enforcement of a communication policy on the bus; hardware feature upgrade.

More specifically, according to a first aspect the invention relates to a System-on-Chip arrangement which comprises: a common processor carrier; a processor bus; an electronic component arranged on the common processor carrier, the electronic component being attached to the processor bus; a processor arranged on the common processor carrier, the processor being attached to the processor bus for accessing to the electronic component over the processor bus; a configurable bus master circuit being configured to control an access of the processor to the electronic component over the processor bus according to an access rule; a memory being configured to store configuration data for configuring the master circuit in order to control access of the processor to the electronic component according to the access rule.

Furthermore, the configuration data is digitally signed with a digital signature upon the basis of a cryptographic encryption key, wherein the cryptographic encryption key is associated with a cryptographic decryption key and wherein the cryptographic encryption key and the cryptographic decryption key jointly form an asymmetric cryptographic key pair. The configurable bus master circuit is configurable according to the access rule after successful verification of the digital signature upon the basis of the cryptographic decryption key.

In a further possible implementation form of the first aspect, the signature verification and the enforcement of the access rule by the bus master circuit can be time-wise separated processes. Once the digital signature has been successfully verified, the access rule can be stored in the memory only accessible for the bus master circuit. Then an additional verification is not necessary.

Thus, an improved System-on-Chip arrangement is provided, strengthening security of the digital data and allowing tamper-proofing of the digital data.

In a further possible implementation form of the first aspect, the configurable bus master circuit is a configurable hardware circuit according to the access rule.

In a further possible implementation form of the first aspect, the configurable bus master circuit comprises hardware-wired logic gates being configurable according to the access rule.

In a further possible implementation form of the first aspect, the configurable bus master circuit is adapted to configure the hardware-wired logic gates, in particular upon receiving the access rule.

Thus, the configurable bus master circuit can be configured according to the access rule efficiently.

In a further possible implementation form of the first aspect, the access rule indicates a bus address of at least a hardware region of the electronic component, wherein the bus master hardware is configurable to restrict, in particular to block, or to allow an access of the processor to the hardware region upon receiving an access request from the processor, the access request indicating the bus address of the hardware region of the electronic component.

Thus, access to the hardware region of the electronic component can be controlled in a secure manner.

In a further possible implementation form of the first aspect, the processor located on the common carrier or the configurable bus master circuit are configured to verify the digital signature upon the basis of the cryptographic decryption key.

Thus, the digital signature can be verified upon the basis of the cryptographic decryption key correctly and efficiently.

In a further possible implementation form of the first aspect, wherein, upon successful verification of the digital signature, the memory or the processor are configured to provide the access rule to the configurable bus master circuit or to configure the configurable bus master circuit according to the access rule.

Thus, the configurable bus master circuit can be configured to control the access to the electronic component in a secure manner.

In a further possible implementation form of the first aspect, the System-on-Chip arrangement is configured to discard the configuration data if the digital signature has not been successfully verified.

Thus, the access to the electronic component can be controlled in a secure manner.

In a further possible implementation form of the first aspect, the System-on-Chip arrangement further comprises a communication interface, the communication interface being configured to receive the digitally signed configuration data, and to store the digitally signed configuration data in a memory of the System-on-Chip arrangement.

Thus, the configuration data can be transmitted via the communication interface efficiently.

In a further possible implementation form of the first aspect, the electronic component is one of the following components: a memory, in particular being configured to store the digitally signed configuration data, a further processor, in particular being configured to implement a cryptographic operation such as a cryptographic accelerator, or a communication interface.

Thus, the configuration data can be digitally signed and provided in a secure manner.

In a further possible implementation form of the first aspect, the processor bus is hardware-wired, in particular an AMBA (Advanced Microcontroller Bus Architecture) bus. Thus, the processor can be controlled over the processor bus in an efficient manner.

In a further possible implementation form of the first aspect, the configuration data further comprises an operation characteristic of the processor or of the electronic component, and the processor or the electronic component are configured to operate according to the operation characteristic upon successful verification of the digital signature.

Thus, the processor or the electronic component can be configured to operate securely.

In a further possible implementation form of the first aspect, the operation characteristic is an operation frequency, in particular a maximum operation frequency.

Thus, the processor or the electronic component can be configured securely to operate in an efficient manner.

In a further possible implementation form of the first aspect, the System-on-Chip arrangement comprises an embedded semiconductor circuit.

In a further possible implementation form of the first aspect, the System-on-Chip arrangement comprises a wireless communication interface for communicating over a mobile communication network, in particular a 5G communication network.

Thus, the System-on-Chip arrangement can transmit and receive data via the wireless communication interface within a mobile communication network efficiently.

In a further possible implementation form of the first aspect, the processor is configured for data processing, in particular for processing measurement data in an loT communication system.

Thus, the processor can process data in an loT communication system efficiently.

According to a second aspect the invention relates to a method for operating a System-on-Chip arrangement, wherein the System-on-Chip arrangement comprises: a common processor carrier; a processor bus; an electronic component arranged on the common processor carrier, the electronic component being attached to the processor bus; a processor arranged on the common processor carrier, the processor being attached to the processor bus for accessing to the electronic component over the processor bus; a configurable bus master circuit, the configurable bus master circuit being configured to control an access of the processor to the electronic component over the processor bus according to an access rule; and a memory being configured to store configuration data for configuring the master circuit in order to control access of the processor to the electronic component according to an access rule.

Furthermore, the configuration data is digitally signed with a digital signature upon the basis of a cryptographic encryption key, and the cryptographic encryption key is associated with a cryptographic decryption key, wherein the cryptographic encryption key and the cryptographic decryption key jointly form an asymmetric cryptographic key pair.

The above method comprises the following steps: a first step of verifying the digital signature upon the basis of the cryptographic decryption key; and a second step of configuring the configurable bus master circuit according to the access rule upon successful verification of the digital signature.

Thus, an improved method for operating a System-on-Chip arrangement is provided, tightening security of the digital data and allowing tamper-proofing of the digital data.

The invention can be implemented in hardware and/or software.

### BRIEF DESCRIPTION OF THE DRAWINGS

Further embodiments of the invention will be described with respect to the following figures, wherein:
Figure 1 shows a schematic diagram illustrating a System-on-Chip arrangement according to an embodiment;
Figure 2 shows a schematic diagram illustrating a verification procedure of a digital signature by a configurable bus master circuit according to an embodiment;
Figure 3 shows a schematic diagram illustrating a verification procedure of a digital signature by a processor according to an embodiment;
Figure 4 shows a schematic diagram illustrating an exemplary System-on-Chip arrangement layout according to an embodiment;
Figure 5 shows a schematic diagram illustrating possible implementation of a state machine in a bus master according to an embodiment; and
Figure 6 shows a schematic diagram illustrating a method for operating a System-on-Chip arrangement according to an embodiment.

In the various figures, identical reference signs will be used for identical or at least functionally equivalent features.

### DETAILED DESCRIPTION OF EMBODIMENTS

In the following description, reference is made to the accompanying drawings, which form part of the disclosure, and in which are shown, by way of illustration, specific aspects in which the present invention may be placed. It will be appreciated that other aspects may be utilized and structural or logical changes may be made without departing from the scope of the present invention. The following detailed description, therefore, is not to be taken in a limiting sense, as the scope of the present invention is defined by the appended claims.

For instance, it will be appreciated that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures.

Moreover, in the following detailed description as well as in the claims embodiments with different functional blocks or processing units are described, which are connected with each other or exchange signals. It will be appreciated that the present invention covers embodiments as well, which include additional functional blocks or processing units that are arranged between the functional blocks or processing units of the embodiments described below.

Finally, it is understood that the features of the various exemplary aspects described herein may be combined with each other, unless specifically noted otherwise.

Generally, embodiments of the invention improve security of digital data and allow for tamper-proofing of the digital data. Data security should be integrated from inception, as adding security measures late in the development process rarely works.

In this regard, the embodiments of the present invention enable a security implementation on a system bus, e.g. AMBA (Advanced Microcontroller Bus Architecture) bus on the improved System-on-Chip arrangement. Thus, the embodiments of the present invention can in particular accomplish a higher level of data security and become independent of any security software.

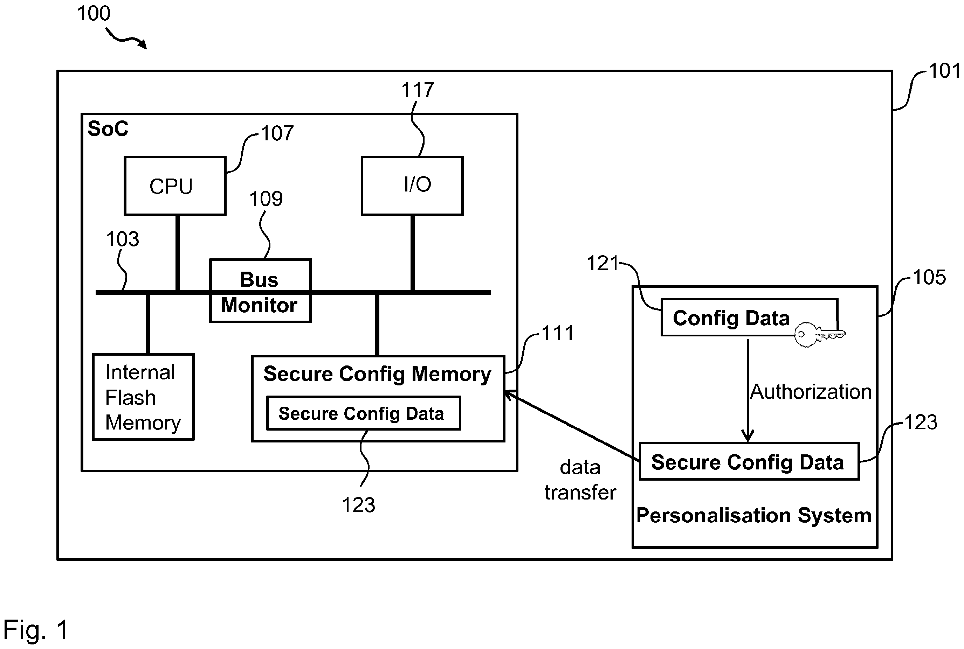

As will be described in more detail below under reference to figures 1 to 3, embodiments of the invention relate to a System-on-Chip arrangement 100 which comprises a common processor carrier 101; a processor bus; an electronic component 105, a processor 107 arranged on the common processor carrier 101; a configurable bus master circuit 109 and a memory 111. In an embodiment, the System-on-Chip arrangement 100 comprises an embedded semiconductor circuit and the processor bus is hardware-wired, in particular an AMBA bus.

The processor 107 is attached to the processor bus for accessing to the electronic component 105 over the processor bus and the configurable bus master circuit 109 is configured to control an access of the processor 107 to the electronic component 105 over the processor bus according to an access rule, wherein the configurable bus master circuit 109 can be configured via configuration data 123 in order to control access of the processor 107 to the electronic component 105. In an embodiment, the configuration data 123 can be stored in the memory 111.

In an embodiment, the configuration data 123 is digitally signed with a digital signature upon the basis of a cryptographic encryption key, wherein the cryptographic encryption key is associated with a cryptographic decryption key and the cryptographic encryption key and the cryptographic decryption key jointly form an asymmetric cryptographic key pair. The configurable bus master circuit 109 is configurable according to the access rule after successful verification of the digital signature upon the basis of the cryptographic decryption key.

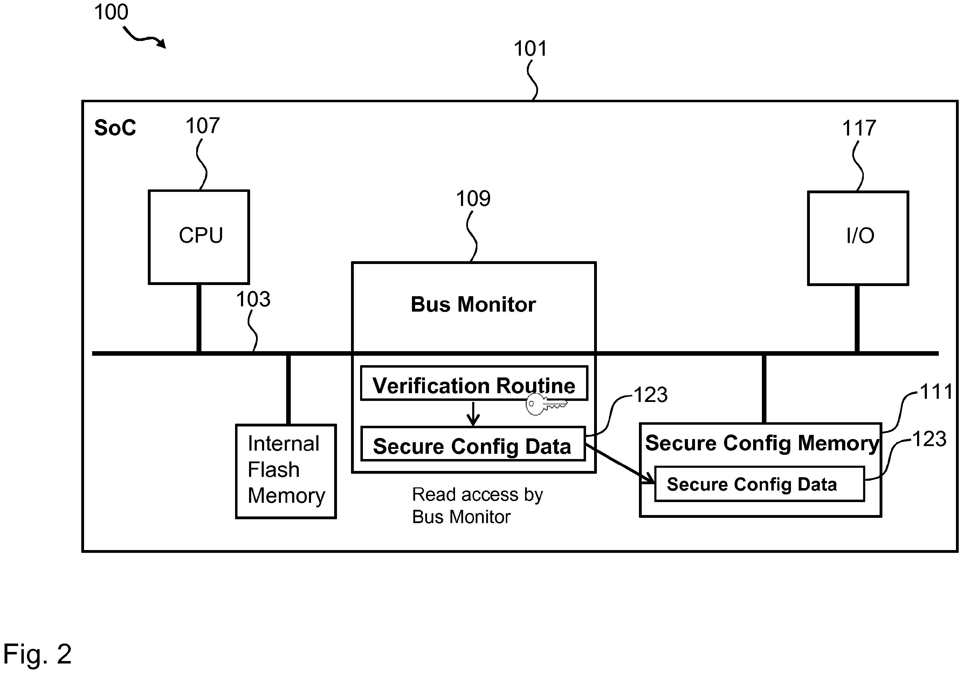

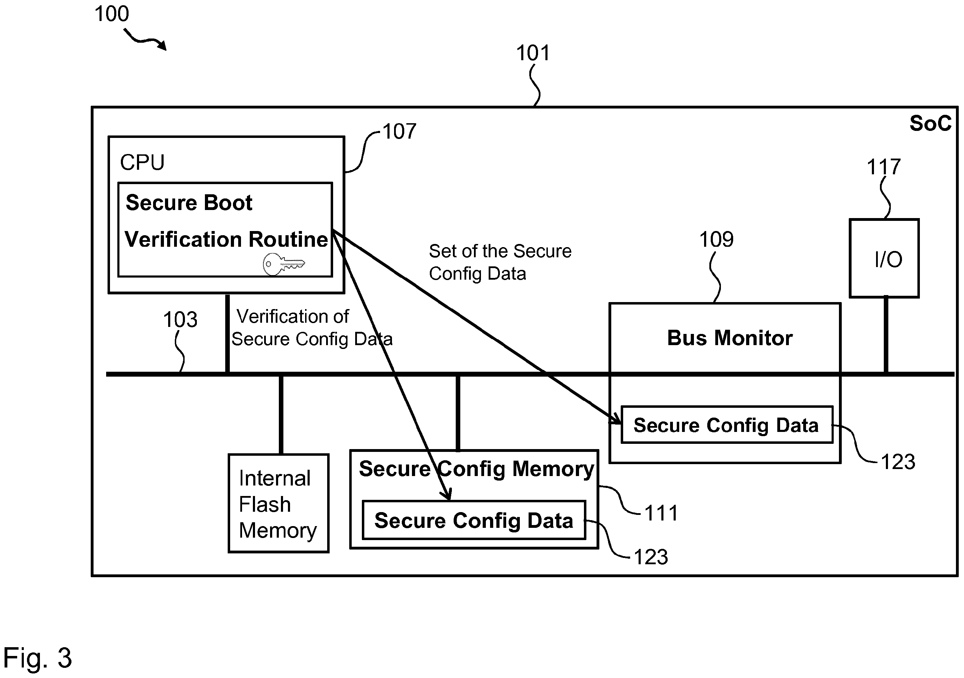

The verification of the digital signature can be performed by the configurable bus master circuit 109 and/or the processor 107 according to an embodiment, which will be discussed in more detail below under reference to figures 2 and 3.

In another embodiment, the electronic component 105 is one of the following components: a memory in particular configured to store the digitally signed configuration data 123 and/or a further processor configured to implement a cryptographic operation such as a cryptographic accelerator, or a communication interface.

In a further embodiment, the processor 107 is configured for data processing, in particular for processing measurement data in an loT communication system.

As can be taken from figures 1 to 3, the System-on-Chip arrangement 100 further comprises a communication interface 117 which is configured to receive the digitally signed configuration data 123 and to store the digitally signed configuration data 123 in the memory 111 of the System-on-Chip arrangement 100. In an embodiment, the communication interface 117 can also be a wireless communication interface for communicating over a mobile communication network, in particular a 5G communication network.

In an embodiment, the configurable bus master circuit 109 is a configurable hardware circuit according to the access rule. Moreover, the configurable bus master circuit 109 can comprise hardware-wired logic gates being configurable according to the access rule, and the configurable bus master circuit 109 is adapted to configure the hardware-wired logic gates, in particular upon receiving the access rule.

In an embodiment, the access rule indicates a bus address of at least a hardware region of the electronic component 105, wherein the bus master hardware is configurable to restrict, in particular to block, or to allow an access of the processor 107 to the hardware region upon receiving access request from the processor 107. The access request indicates the bus address of the hardware region of the electronic component 105.

In an embodiment, the configuration data further comprises an operation characteristic of the processor 107 or of the electronic component 105, and the processor 107 or the electronic component 105 are configured to operate according to the operation characteristic upon successful verification of the digital signature. As an example, the operation characteristic is an operation frequency, in particular a maximum operation frequency.

Figure 2 shows a schematic diagram illustrating an exemplary procedure of verification by the configurable bus master circuit 109 according to an embodiment. The configurable bus master circuit 109 is configured to verify the digital signature upon the basis of the cryptographic decryption key during a verification routine.

Upon successful verification of the digital signature, the memory 111 is configured to provide the access rule to the configurable bus master circuit 109 or to configure the configurable bus master circuit 109 according to the access rule. Otherwise, the System-on-Chip arrangement 100 can discard the configuration data if the digital signature has not been successfully verified.

Alternatively, figure 3 shows a schematic diagram illustrating an exemplary procedure of verification by the processor 107 according to an embodiment. In this embodiment, the processor 107 located on the common carrier 101 is configured to verify the digital signature upon the basis of the cryptographic decryption key. Upon successful verification of the digital signature, the memory 111 or the processor 107 can provide the access rule to the configurable bus master circuit 109 or configure the configurable bus master circuit 109 according to the access rule.

In summary, the embodiments of the invention enable a System-on-Chip arrangement 100 which comprises mainly the following components: a secure memory 111 located on the System-on-Chip arrangement 100 which has integrity protection and anti-rollback protection; a bus master circuit 109 which is configured by the secure configuration data 123 stored in the secure memory 111; a verification unit part of the System-on-Chip arrangement 100, preferably the bus master circuit 109, which checks the secure configuration data 123 on integrity and authorization; and finally an external personalisation system 105 which authorizes the unsigned configuration data 121 and then writes the secure configuration data 123 into the memory either during production or with help of a remote connection when the device is in the field.

According to an embodiment, the personalisation system 105 first authorizes the unsigned configuration data 121, e.g., by signing them with a private key, as shown in figure 1 and then the secure configuration data 123 is transferred to the secure memory 111 located at the System-on-Chip arrangement 100 either during production or via Over-the-Air transfer. It is notable that, for this process, no transport security or secure channel is required, but it can be optionally added. The System-on-Chip arrangement 100 can be optionally configured to be not functional without secure configuration data 123 being available. The secure configuration data 123 is verified either by the bus master circuit 109 or by a secure boot executed at the processor 107. Finally, the secure configuration data 123 is enforced by the bus master circuit 109. Such an enforcement is described in the following.

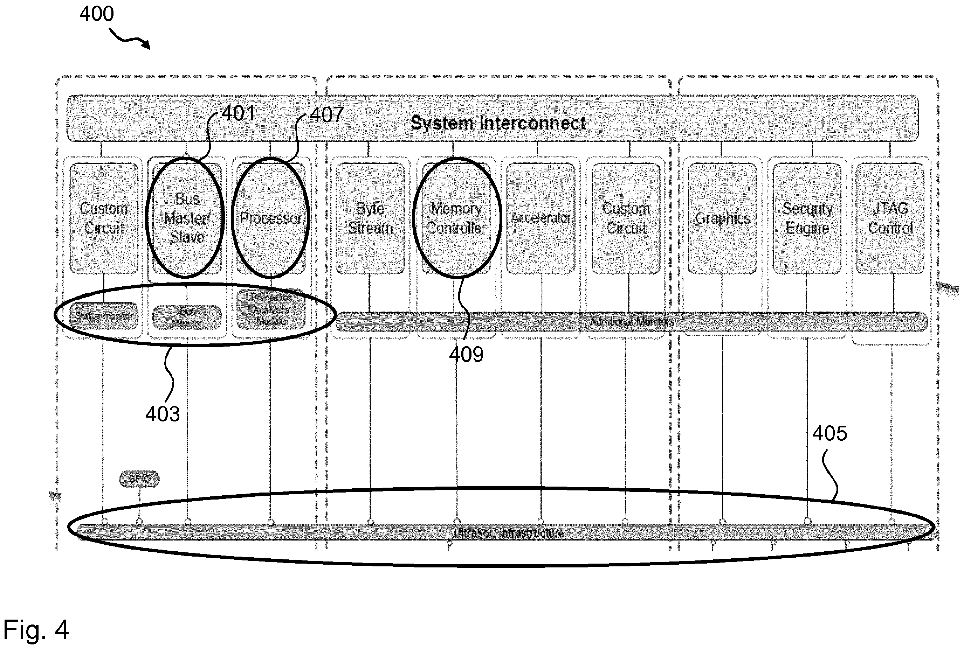

An exemplary System-on-Chip arrangement layout 400 is sketched in figure 4, wherein this System-on-Chip arrangement layout 400 according to an embodiment comprises a bus master 401, a processor analysis module 403 and an additional fabric so called "UltraSoC Infrastructure" 405 in conjunction with a processor 407 and a memory controller 409. It is to be noted that the invention can be implemented in any kind of bus monitoring system and does not depend on the UltraSoC technology.

In an embodiment, the additional bus controller 403 allows an interception of the communication between the processor 407 and the persistent memory via the memory controller 409. This interception is propagated via a second bus 405, which ensures additional channel to enforce a secure configuration policy.

For this purpose, the bus controller 403 can enforce decisions related to the usage of several components on the System-on-Chip arrangement 400, especially leveraging System-on-Chip components and resources.

According to the embodiment, the secure configuration data can contain rules for unlocking certain features assigned to certain components on the System-on-Chip arrangement 400, which results in a feature en- or disablement or a complete dis- or enablement of the System-on-Chip arrangement 400.

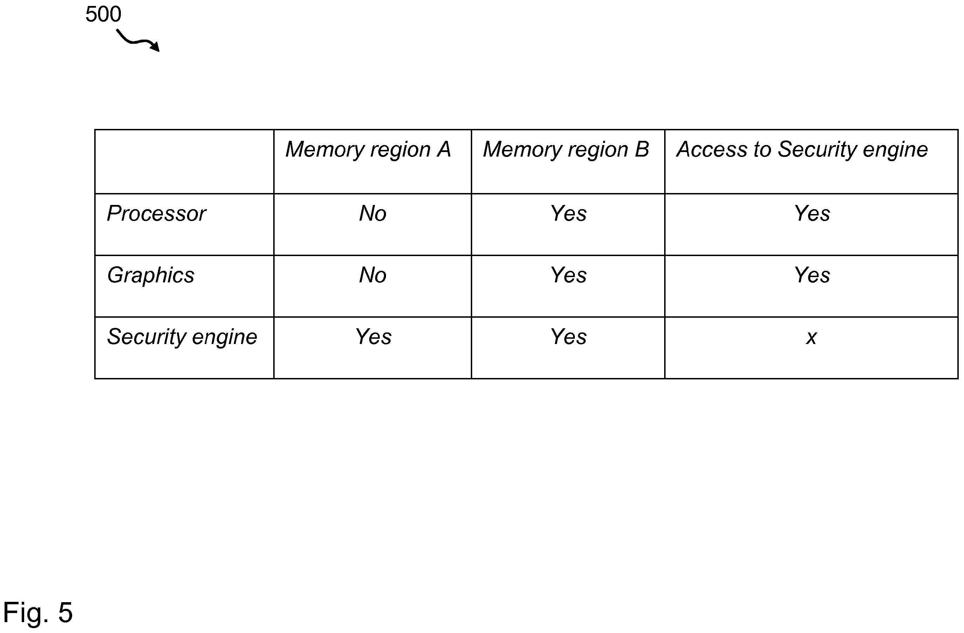

For example, the bus master 401 can contain a state machine with rules for accessing memory sections, I/O interfaces, debug interfaces, etc. A possible implementation of such a state machine in a bus master 401 can be seen in the table 500 shown in figure 5.

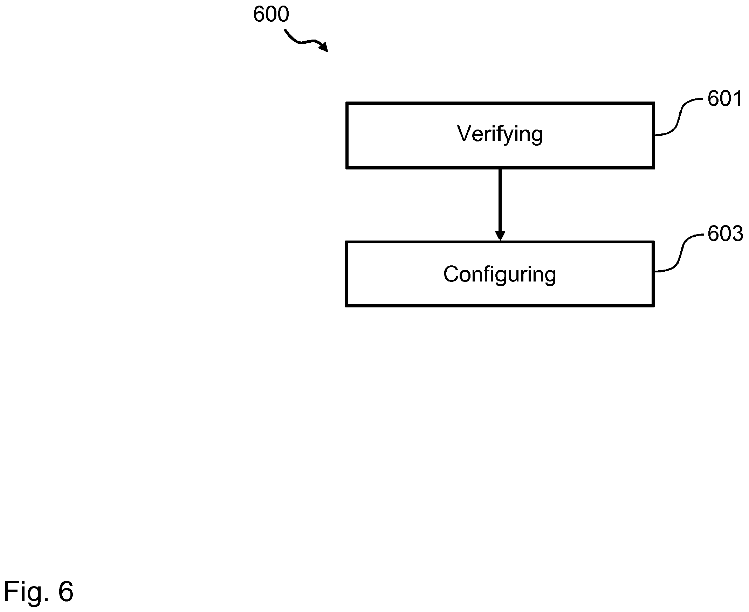

Figure 6 shows a schematic diagram illustrating a method 600 for operating a System-on-Chip arrangement according to an embodiment.

The System-on-Chip arrangement comprises: a common processor carrier; a processor bus; an electronic component arranged on the common processor carrier, the electronic component being attached to the processor bus; a processor arranged on the common processor carrier, the processor being attached to the processor bus for accessing to the electronic component over the processor bus; a configurable bus master circuit, the configurable bus master circuit being configured to control an access of the processor to the electronic component over the processor bus according to an access rule; and a memory being configured to store configuration data for configuring the master circuit in order to control access of the processor to the electronic component according to an access rule.

Furthermore, the configuration data is digitally signed with a digital signature upon the basis of a cryptographic encryption key, and the cryptographic encryption key is associated with a cryptographic decryption key, wherein the cryptographic encryption key and the cryptographic decryption key jointly form an asymmetric cryptographic key pair.

The method 600 comprises the following steps: a first step 601 of verifying the digital signature upon the basis of the cryptographic decryption key; and a second step 603 of configuring the configurable bus master circuit according to the access rule upon successful verification of the digital signature.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. System-on-Chip arrangement (100), comprising:
a common processor carrier (101);
a processor bus (103);
an electronic component (105) arranged on the common processor carrier (101), the electronic component (105) being attached to the processor bus (103);
a processor (107) arranged on the common processor carrier (101), the processor (107) being attached to the processor bus for accessing to the electronic component over the processor bus;
a configurable bus master circuit (109), the configurable bus master circuit (109) being configured to control an access of the processor (107) to the electronic component (105) over the processor bus (103) according to an access rule;
a memory (111) being configured to store configuration data (123) for configuring the bus master circuit (109) in order to control access of the processor (107) to the electronic component (105) according to the access rule, wherein the configuration data (123) is digitally signed with a digital signature upon the basis of a cryptographic encryption key, wherein the cryptographic encryption key is associated with a cryptographic decryption key, wherein the cryptographic encryption key and the cryptographic decryption key jointly form an asymmetric cryptographic key pair; and wherein
the configurable bus master circuit (109) is configurable according to the access rule after successful verification of the digital signature upon the basis of the cryptographic decryption key.

2. The System-on-Chip arrangement (100) of claim 1, wherein the configurable bus master circuit (109) is a configurable hardware circuit according to the access rule.

3. The System-on-Chip arrangement (100) of anyone of the preceding claims, wherein the configurable bus master circuit (109) comprises hardware-wired logic gates being configurable according to the access rule.

4. The System-on-Chip arrangement (100) of anyone of the preceding claims, wherein the configurable bus master circuit (109) is adapted to configure the hardware-wired logic gates, in particular upon receiving the access rule.

5. The System-on-Chip arrangement (100) of anyone of the preceding claims, wherein the access rule indicates a bus address of at least a hardware region of the electronic component (105), wherein the bus master hardware is configurable to restrict, in particular to block, or to allow an access of the processor (107) to the hardware region upon receiving an access request from the processor (107), the access request indicating the bus address of the hardware region of the electronic component (105).

6. The System-on-Chip arrangement (100) of anyone of the preceding claims, wherein the processor (107) located on the common carrier (101) or the configurable bus master circuit (109) are configured to verify the digital signature upon the basis of the cryptographic decryption key.

7. The System-on-Chip arrangement (100) of claim 6, wherein, upon successful verification of the digital signature, the memory (111) or the processor (107) are configured to provide the access rule to the configurable bus master circuit (109) or to configure the configurable bus master circuit (109) according to the access rule.

8. The System-on-Chip arrangement (100) of anyone of the preceding claims, being configured to discard the configuration data if the digital signature has not been successfully verified.

9. The System-on-Chip arrangement (109) of anyone of the preceding claims, further comprising a communication interface (117), the communication interface (117) being configured to receive the digitally signed configuration data (123), and to store the digitally signed configuration data (123) in a memory of the System-on-Chip arrangement (100).

10. The System-on-Chip arrangement (100) of anyone of the preceding claims, wherein the electronic component (105) is one of the following components: a memory, in particular being configured to store the digitally signed configuration data (123), a further processor, in particular being configured to implement a cryptographic operation such as a cryptographic accelerator, or a communication interface.

11. The System-on-Chip arrangement (100) of anyone of the preceding claims, wherein the processor bus (103) is hardware-wired, in particular an Advanced Microcontroller Bus Architecture, AMBA, bus.

12. The System-on-Chip arrangement (100) of anyone of the preceding claims, wherein the configuration data further comprises an operation characteristic of the processor (107) or of the electronic component (105), and wherein the processor (107) or the electronic component (105) are configured to operate according to the operation characteristic upon successful verification of the digital signature.

13. The System-on-Chip arrangement (100) of claim 12, wherein the operation characteristic is an operation frequency, in particular a maximum operation frequency.

14. The System-on-Chip arrangement (100) according to anyone of the preceding claims, wherein the System-on-Chip arrangement (100) comprises a wireless communication interface for communicating over a mobile communication network, in particular a 5G communication network.

15. The System-on-Chip arrangement (100) according to anyone of the preceding claims, wherein the processor (107) is configured for data processing, in particular for processing measurement data in an loT communication system.

16. Method (600) for operating a System-on-Chip arrangement (100), the System-on-Chip arrangement (100) comprising a common processor carrier (101), a processor bus (103), an electronic component (105) arranged on the common processor carrier (101), the electronic component (105) being attached to the processor bus (103), a processor (107) arranged on the common processor carrier (101), the processor (107) being attached to the processor bus (103) for accessing to the electronic component (105) over the processor bus (103), a configurable bus master circuit (109), the configurable bus master circuit (109) being configured to control an access of the processor (107) to the electronic component (105) over the processor bus (103) according to an access rule, and a memory (111) being configured to store configuration data (123) for configuring the bus master circuit (109) in order to control access of the processor (107) to the electronic component (105) according to the access rule, wherein the configuration data (123) is digitally signed with a digital signature upon the basis of a cryptographic encryption key, wherein the cryptographic encryption key is associated with a cryptographic decryption key, wherein the cryptographic encryption key and the cryptographic decryption key jointly form an asymmetric cryptographic key pair; the method (600) comprising:
verifying (601) the digital signature upon the basis of the cryptographic decryption key; and
configuring (603) the configurable bus master circuit (109) according to the access rule upon successful verification of the digital signature.
